# EUROPEAN PATENT SPECIFICATION

(11) **EP 1 040 766 B1**
(45) Date of publication and mention of the grant of the patent: **26.05.2004**
(21) Application number: 00106085.4
(22) Date of filing: 30.03.2000
(51) Int. Cl.: A23L 1/304, A23L 1/305, A23L 2/52

(54) **Iron-enriched beverage**
Mit Eisen angereicherte Getränke
Boisson enrichie en fer

(30) Priority: 30.03.1999 JP 8974199
(43) Date of publication of application: 04.10.2000
(73) Proprietor: SNOW BRAND MILK PRODUCTS, CO., LTD., Sapporo-shi Hokkaido 065-0043 (JP)
(72) Inventor: Abe, Takumi, Kawagoe-shi, Saitama 350-1167 (JP); Suguri, Toshiaki, Tokyo 116-0011 (JP); Sato, Kaoru, Kamifukuoka-shi, Saitama 356-0033 (JP); Onishi, Yoshinori, Kawachi-gun, Tochigi 329-0434 (JP)
(74) Representative: Forstmeyer, Dietmar, Dr. rer. nat., Dipl.-Chem.

(56) References cited:
- EP-A- 0 409 252
- EP-A- 0 454 084
- EP-A- 0 656 366
- PATENT ABSTRACTS OF JAPAN vol. 1996, no. 03, 29 March 1996 (1996-03-29) & JP 07 304798 A (SNOW BRAND MILK PROD CO LTD), 21 November 1995 (1995-11-21) & DATABASE WPI Derwent Publications Ltd., London, GB; AN 1996-035891

## Description

### TECHNICAL FIELD

The present invention relates to a highly tasty iron-enriched beverage that is blended with chalybeate (iron agent) containing iron-lactoferrins and in which generation of iron taste, precipitation and turbidity during production and storage are prevented.

### BACKGROUND ART

Uptake of iron by Japanese has been showing a laterigrade transition around 100% sufficiency of the required amount since 1975 to date and hence iron is one of nutrients that must be taken mindfully at meals. In particular, iron deficiency has been pointed out in women of younger and middle generations since their sufficiency of the iron uptake is 80% level ("1998 Current Status of Alimentation of Japanese nationals", Daiichi Publishing Co., Ltd., 1998). However, inorganic iron such as ferrous sulfate or iron citrate generally used as chalybeate has the problem that when it is added to foodstuffs in large amounts it gives stringent taste or metal taste specific to iron so that it is unsuitable as an iron enriched beverage for persons having an anemic drift or for pregnant women or nursing mothers. Use of heme iron has the problem on taste because it smells like blood and tastes like a metal.

Chalybeate containing iron and lactoferrins has neither stringent taste nor metal taste specific to iron and has good flavor. It is stable and resistant to heat in a wide range of pH so that use of chalybeate gives rise to iron-enriched food having no iron taste but having good quality (JP-A-7-304798).

On the other hand, fresheners generally contain citric acid, malic acid, etc. or combinations thereof as an acidulant. However, use of these acidulants in combination with chalybeate containing iron and lactoferrins in iron-enriched beverages causes the problem of generating precipitation or iron taste during production or storage so that such a combined use is undesirable from the viewpoints of taste and quality. Furthermore, generally fresheners use sugars such as sucrose, fructose, glucose, and lactose as glucides or the glucides in combination with sugar alcohols such as maltitol. However, combined use of chalybeate containing iron and lactoferrins and the above sweeteners leads to occurrence of precipitation or iron taste during production or storage. This is also undesirable from the viewpoints of taste and quality.

EP-A-0 656 366 discloses reconstituted skim milk comprising iron-lactoferrin complex and a small amount of lactic acid.

### DISCLOSURE OF THE INVENTION

Accordingly, an object of the present invention is to provide an iron-enriched beverage having good taste and quality that is free from presenting iron taste and generating precipitation, turbidity, etc. during production or storage.

With view to solving the above problems, the present inventors have made intensive research in order to develop an iron-enriched beverage using chalybeate containing iron and lactoferrins. As a result, the inventors have found that the chalybeate when in use in combination with at least one acidulant selected from acetic acid, gluconic acid and lactic acid can give rise to an iron-enriched beverage having a good quality that is free from generating iron taste or precipitation, turbidity, etc. Furthermore, use of a non-reducing glucide and/or high intensity sweetener as a sweetener results in further increased effects. The present invention has been achieved based on this discovery.

That is, the iron-enriched beverage of the present invention comprises chalybeate containing iron and a lactoferrin, and at least one acidulant selected from acetic acid, gluconic acid and lactic acid, and a non-reducing sugar and/or a high intensity sweetener as a sweetener.

### BEST MODE FOR CARRYING OUT THE INVENTION

In the present invention, the chalybeate that contains iron and a lactoferrin used refers to one such that when it is in a solution the iron and lactoferrin are not in a free state. Such a chalybeate includes, for example, an iron-lactoferrin that is obtained by dissolving lactoferrin in water, and then adding an iron compound thereto to react lactoferrin with iron to thereby convert the iron in the lactoferrin solution in a non-free state (JP-A-4-141067), iron-lactoferrin powder produced by adding an iron salt to a lactoferrin solution, and then adjusting its H with an alkali (JP-A-7-17875), or iron-lactoferrin couple or iron-lactoferrin complex comprising a lactoferrin, carbonic acid and/or bicarbonic acid, and iron, etc. Preferably, iron-lactoferrin couple that contains a lactoferrin to which carbonic acid and/or bicarbonic acid, and iron are connected (JP-A-6-239900) and/or iron-lactoferrin complex that contains a lactoferrin to which carbonic acid and/or bicarbonic acid, and iron are connected (JP-A-7-304798). The iron-lactoferrin couple or iron-lactoferrin complex contains 15 mg or more of carbonic acid and/or bicarbonic acid per g of lactoferrin and 10 to 700 mg of iron per g of lactoferrin in combination and have heat resistance so that they form no precipitate when heated and they present no stringent taste of iron nor metal taste; they have excellent fitness for food materials.

As the lactoferrins, mention nay be made of lactoferrin isolated from a secretion such as milk of mammals. Since transferrins isolated from blood or organs and ovotransferrin isolated from eggs have similar properties to the above, these substances can also be used in the present invention. The lactoferrins do not have to be isolated or purified completely but may be used in a state where other components are contained. It is also possible to use lactoferrins produced by microbes, animal cells or transgenic animals by utilization of genetic manipulation. Furthermore, enzymatically hydrolyzed lactoferrins may be used. In the present invention, the term "lactoferrin" or "lactoferrins" is used so as to include one of or all of these lactoferrins, respectively.

Examples of the iron include ferrous sulfate, ferrous gluconate, iron lactate, iron citrate, sodium ferrous citrate, ammonium iron citrate, ferrous pyrophosphate, ferric pyrophosphate, ferric chloride, ferric nitrate, ferric sulfate, etc.

The carbonic acid and bicarbonic acid used in the iron-lactoferrin couple and iron-lactoferrin complex include, for example, soda water, sodium bicarbonate, potassium bicarbonate, ammonium bicarbonate, sodium carbonate, potassium carbonate, ammonium carbonate, calcium carbonate, magnesium carbonate or mixtures thereof. To adj ust pH, use can be made of sodium hydroxide, potassium hydroxide, ammonia, hydrochloric acid, acetic acid, gluconic acid, lactic acid, etc.

To impart acidity to the iron-enriched beverage of the present invention, at least one selected from acetic acid, gluconic acid and lactic acid is used as an acidulant. Here, the acetic acid may be a substance containing acetic acid such as synthetic acetic acid or glacial acetic acid chemically synthesized or fermented acetic acid fermented from cereals, fruits, etc.

Non-reducing glucides and high intensity sweeteners used as a sweetener in the iron-enriched beverage of the present invention include sugar alcohols such as erythritol, maltitol, and sorbitol, stable non-reducing sugars such as trehalose, palatinitol, reduced millet jelly, etc., high intensity sweeteners such as stevia and aspartame. They exhibit excellent effects. As the high intensity sweeteners, sweeteners other than the above-described ones may also be used so far as they are non-reducing, in other word, they do not show such reduction property as the iron-lactoferrin is affected, because they sufficiently present the excellent sweetness in small addition amounts.

Hereinafter, the present invention will be explained in detail by reference examples and test examples.

### Reference Example 1

### Preparation of Iron-Lactoferrin Couple

To 10 liters of water were dissolved 90 g of lactoferrin (Lf) and 52 g of ferric chloride and while stirring the mixture, 5 g of sodium bicarbonate was added to prepare a solution containing iron-lactoferrin couple. The solution was desalted and concentrated through an ultrafiltration membrane cutting a molecular weight of 5,000 above and then water was added to make a solution of 10 liters in volume. Measurement of the obtained solution containing iron-lactoferrin couple by inductively coupled plasma (ICP) emission spectrochemical analyzer revealed that the amount of iron contained in the solution was 102 mg/100 ml and 113 mg of iron per g of lactoferrin was coupled. The solution containing the iron-lactoferrin couple was tasteless and odorless in spite of its high iron concentration.

### Reference Example 2

### Preparation of Iron-Lactoferrin Complex

To 2 liters of water was added 400 g of sodium bicarbonate and the mixture was stirred with a stirrer to prepare a supersaturated sodium bicarbonate solution. To this was added a solution of 90 g of lactoferrin (Lf) and 52 g of ferric chloride in 8 liters of water with stirring to prepare a solution containing an iron-lactoferrin complex. The solution was desalted and concentrated through an ultrafiltration membrane cutting a molecular weight of 5,000 above and then water was added to make a solution of a volume of 10 liters. Measurement of the obtained solution containing iron-lactoferrin complex by inductively coupled plasma (ICP) atomic emission spectrochemical analyzer revealed that the amount of iron contained in the solution was 101 mg/100 ml and 112mg of iron per g of lactoferrin was coupled. The solution containing the iron-lactoferrin complex was tasteless and odorless in spite of its high iron concentration.

### Test Example 1

Generation of iron taste and precipitation when using the chalybeate containing iron and lactoferrin(s) and each acidulant were examined.

The solution containing the iron-lactoferrin complex prepared in Reference Example 2 was diluted with water so that the iron concentration was 12 mg/100 ml and adjusted to pH 3.9 by use of each acidulant (acetic acid, gluconic acid, lactic acid, tartaric acid, malic acid, or citric acid). Then, the obtained solution was filled in a vial and pasteurized at 85°C for 30 minutes to obtain each sample as below.
Sample 1: An iron-lactoferrin complex solution adjusted to pH 3.9 with acetic acid
Sample 2: An iron-lactoferrin complex solution adjusted to pH 3.9 with gluconic acid.
Sample 3: An iron-lactoferrin complex solution adjusted to pH 3.9 with lactic acid
Sample 4: An iron-lactoferrin complex solution adjusted to pH 3.9 with tartaric acid
Sample 5: An iron-lactoferrin complex solution adjusted to pH 3.9 with malic acid
Sample 6: An iron-lactoferrin complex solution adjusted to pH 3.9 with citric acid

Samples 1 to 6 above were measured of concentration of free iron in the aqueous solution and also subjected to organoleptic evaluation by a panel consisting of five experts. Note that measurement of the concentration of free iron was performed using a small amount ultrafiltration unit (MOLCUT; manufactured by MILLIPORE CO.) for molecular weight of 5,000 and an iron measurement kit (Fe C-TEST WAKO; manufactured by Wako Pure Chemical Industries, Ltd.) as follows .

First, about 1 ml each of Samples 1 to 6 was set in the small amount ultrafiltration unit and filtrated under pressure. 0.2 ml each of the filtrate was dispensed in a test tube and 2.0 ml each of a solution obtained by mixing 0.4 M acetate buffer (pH 6.5) and 0.45 M thioglycolic acid as a reducing agent in a proportion of 20:1 (volume ratio) was dispensed in the test tube and sufficiently mixed. Further, one drop of 22 mM 2-nitroso-5- (N-propyl-N-sulfopropylamino) phenol (Nitroso-PSAP) as a color developer was added and mixed sufficiently. Then, the obtained solution was left to stand at room temperature for 5 minutes and absorbance at 750 nm was measured within 2 hours. Furthermore, 0.2 ml each of iron standard solutions (iron concentrations: 0, 50, 100, 150, 200 µg%) was dispensed in the test tube and 2.0 ml each of a solution obtained by mixing 0.4 M acetate buffer (pH 6.5) and 0.45 M thioglycolic acid as a reducing agent in a proportion of 20:1 (volume ratio) was dispensed in the test tube and sufficiently mixed. Further, one drop of 22 mM 2-nitroso-5-(N-propyl-N-sulfopropylamino)phenol (Nitroso-PSAP) as a color developer was added and mixed sufficiently. Then, the obtained solution was left to stand at room temperature for 5 minutes and optical density at 750 nm was measured within 2 hours. From the obtained values was prepared a calibration curve and the iron content in the filtrate was measured and deemed as a concentration of free iron in each sample.

Furthermore, the state of solution was observed for each sample and each sample was subjected to organoleptic evaluation by a panel consisting of five experts.

Table 1 shows the results.

**Table 1**

| | Concentration of free iron (mg/100 ml) | State of solution | Organoleptic evaluation |
|---|---|---|---|
| Sample 1 | 0.11 | A | A |
| Sample 2 | 0.32 | A | A |
| Sample 3 | 0.26 | A | A |
| Sample 4 | 0.24 | A | A |
| Sample 5 | 0.09 | A | A |
| Sample 6 | 1.74 | B | B |
| State of solution A: Brown and transparent B: Formed precipitation | | | |
| Organoleptic evaluation A: No iron taste was presented. B: Iron taste was presented. | | | |

From this, it can be seen that use of acidulant other than citric acid as an acidulant and/or a pH adjuster gave rise to no change in the state of solution even after pasteurization. The concentration of free iron was also as low as 3% or less based on the total amount of added iron and no iron taste was presented. However, when citric acid was used as acidulant and/or pH adjuster, precipitation occurred after the pasteurization. The concentration of free iron was high as compared with use of other acidulants and iron taste was presented.

### Test Example 2

Samples 1 to 5 prepared in Test Example 1 were subjected to storage test (accelerated deterioration test) at 50°C for one month.

On the samples kept at 50°C for 1 month were performed measurement of concentration of free iron, observation of the state of solution, and organoleptic evaluation test of iron taste in the same manner as in Test Example 1. Table 2 shows the results.

**Table 2**

| | Concentration of free iron (mg/100 ml) | State of solution | Organoleptic evaluation |
|---|---|---|---|
| Sample 1 | 0.16 | A | A |
| Sample 2 | 0.51 | A | A |
| Sample 3 | 0.35 | A | A |
| Sample 4 | 0.10 | B | A |
| Sample 5 | 0.42 | B | A |
| State of solution A: Brown and transparent B: Formed precipitation | | | |
| Organoleptic evaluation A: No iron taste was presented. B: Iron taste was presented. | | | |

From this, it can be seen that only if acetic acid, gluconic acid or lactic acid was used as an acidulant and/or pH adjuster, neither precipitation was observed after the 1-month accelerated deterioration test, nor iron taste was presented. With samples using tartaric acid or malic acid, occurrence of precipitation was observed after the accelerated deterioration test. However, no iron taste was presented.

### Test Example 3

Occurrence of iron taste and precipitation after storage when chalybeate containing iron and lactoferrins is used in combination with each sweetener were examined. Lactic acid was used as an acidulant.

To 500 ml of deionized water were added 1.5 g of 50% lactic acid and each sweetener (100 g of erythritol, 114 g of sorbitol, 100 g of maltitol, 0.5 g of stevia, 80 g of sucrose, or 67 g of fructose) and the mixture was stirred for dissolution. To this was added the solution containing the iron-lactoferrin complex prepared in Reference Example 2 to a final iron concentration of 16 mg/100 ml. After stirring it, the mixture was messed up to 1,000 ml with deionized water. This was filled in a vial and pasteurized at 85°C for 30 minutes to obtain samples.
Sample 7: A lactic acid solution of iron-lactoferrin complex containing erythritol as a sweetener
Sample 8: A lactic acid solution of iron-lactoferrin complex containing sorbitol as a sweetener
Sample 9: A lactic acid solution of iron-lactoferrin complex containing maltitol as a sweetener
Sample 10: A lactic acid solution of iron-lactoferrin complex containing stevia as a sweetener
Sample 11: A lactic acid solution of iron-lactoferrin complex containing sucrose as a sweetener
Sample 12: A lactic acid solution of iron-lactoferrin complex containing fructose as a sweetener

On Samples 7 to 12 were performed measurement of concentration of free iron, observation of the state of solution, and organoleptic evaluation test of iron taste in the same manner as in Test Example 1. Also, Samples 7 to 12 were subjected to accelerated deterioration test at 50°C for one month. Samples after the test were also subjected to measurement of concentration of free iron, observation of the state of solution, and organoleptic evaluation test of iron taste in the same manner as in Test Example 1. Table 3 shows the results.

**Table 3**

| Immediately after preparation | | | |
|---|---|---|---|
| | Concentration of free iron (mg % ) | State of solution | Organoleptic evaluation |
| Sample 7 | 1.28 | A | A |
| Sample 8 | 1.25 | A | A |
| Sample 9 | 1.23 | A | A |
| Sample 10 | 1.20 | A | A |
| Sample 11 | 1.29 | A | A |
| Sample 12 | 1.19 | A | A |

| 50°C after 1 month | | | |
|---|---|---|---|
| | Concentration of free iron (mg % ) | State of solution | Organoleptic evaluation |
| Sample 7 | 2.14 | A | A |
| Sample 8 | 2.22 | A | A |
| Sample 9 | 1.86 | A | A |
| Sample 10 | 1.86 | A | A |
| Sample 11 | 14.42 | B | B |
| Sample 12 | 15.11 | B | B |
| State of solution A: No change, brown and transparent B: Discoloration (turbidity) or Precipitation was observed. | | | |
| Organoleptic evaluation A: No iron taste was presented. B: Iron taste was presented. | | | |

From this it can be seen that immediately after the preparation of samples no change in iron taste or the state of solution was observed and the concentration of free iron was low. However, after the accelerated deterioration test at 50°C for 1 month, Samples 11 and 12 using sucrose and fructose respectively showed an increase in the concentration of free iron and some change in the state of solution and also strong iron taste was presented. This would be considered to be attributable to liberation of iron from the chalybeate containing iron and lactoferrins by the reducing activity of fructose to present iron taste. Sucrose is not reducing originally but during storage it is decomposed to glucose and fructose, which have reduction property, so that an increase in free iron and generation of iron taste would have occurred. In contrast thereto, Samples 7 to 10 that use erythritol, sorbitol and maltitol, which are stable non-reducing sugars, as well as stevia, which is a high intensity sweetener that can present sufficient sweetness in small addition amounts, respectively, showed no change of the state of solution or presented no iron taste, though those Samples have a tendency showing very slight increase in the concentration of free iron, after the accelerated deterioration test at 50°C for 1 month.

As stated above, a beverage enriched with iron by use of chalybeate containing iron and lactoferrins and blended with lactic acid as an acidulant or pH adjuster, or use of a high intensity sweetener as a sweetener is preferred, since there can be obtained a stable, good tasting, iron-enriched beverage that is free of the occurrence of precipitation during production or storage, of an increase in the concentration of free iron, or of generation of iron taste during storage.

As stated above, in the present invention, use is made of chalybeate containing iron and lactoferrins and at least one member selected from acetic acid, gluconic acid or lactic acid as an acidulant upon production of iron-enriched beverages. Preferably, use is made, as a sweetener, of sugar alcohols such as erythritol, maltitol, and sorbitol, stable non-reducing sugars such as trehalose, palatinitol, reduced millet jelly, etc., high intensity sweeteners such as stevia and aspartame.

Furthermore, in the present invention, non-reducing or non-chelating component may also be used as a raw material besides the above-mentioned chalybeate, sweeteners or acidulants upon production of iron-enriched beverages.

Note that although the blending amounts of chalybeate, acidulant and sweetener are not limited particularly, the blending amount of chalybeate may be determined appropriately so that the purpose of iron enrichment can be achieved. For example, judging from the amount of iron required and the present status of commercial products, it is preferred that about 1 to 12 mg as iron per bottle (50 ml) of chalybeate be blended in the case of iron-enriched beverages. Further, the acidulant can be used for imparting the beverage with acidity and at the same time it can also be used as a pH adjuster. In the case where hot-pack sterilized beverage is produced, the acidulant is added so that the pH of the beverage is below 4.0. In this manner, iron-enriched beverages of which occurrence of iron taste even during storage is prevented can be produced.

### EXAMPLES

Next, the present invention will be explained in more detail by examples.

### Example 1

An iron-enriched beverage was produced using chalybeate containing iron and lactoferrins, acetic acid as an acidulant, and maltitol, a sugar alcohol, as a sweetener.

More particularly, 28.1 kg of 30% acetic acid and 638.5 kg of maltitol were added to 2,500 kg of deionized water at ambient temperature and the mixture was stirred for dissolution. Then, 2 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific density. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained each presented no iron taste and had good flavor and their appearance showed neither precipitation nor turbidity and had a transparent brown color specific to the iron-lactoferrin complex.

### Example 2

An iron-enriched beverage was produced using chalybeate containing iron and lactoferrins, gluconic acid as an acidulant, erythritol, a sugar alcohol, and stevia, a high intensity sweetener, as a sweetener.

More particularly, 12.5 kg of 50% gluconic acid, 285 kg of erythritol, and 1.35 kg of stevia were added to 2,500 kg of deionized water at ambient temperature and the mixture was stirred for dissolution. Then, 2 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific density. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained each presented no iron taste and had good flavor and their appearance showed neither precipitation nor turbidity and had a transparent brown color specific to the iron-lactoferrin complex.

### Example 3

An iron-enriched beverage was produced using chalybeate containing iron and lactoferrins, lactic acid as an acidulant, erythritol, a sugar alcohol as a sweetener, and reduced millet jelly, a non-reducing glucide, for adjusting viscosity.

More particularly, 7.5 kg of 50% lactic acid, 570 kg of erythritol, and 3% of H-Pinedex (reduced millet jelly, manufactured by Matsutani Chemical Industry Co., Ltd.) were added to 2,500 kg of deionized water at ambient temperature and the mixture was stirred for dissolution. Then, 2 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific density. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained each presented no iron taste and had good flavor and their appearance showed no precipitation nor turbidity and had a transparent brown color specific to the iron-lactoferrin complex.

### Comparative Example 1

An iron-enriched beverage was produced using chalybeate containing iron and lactoferrins, citric acid as an acidulant and erythritol, a sugar alcohol, as a sweetener.

More particularly, 3.0 kg of citric acid and 570 kg of erythritol were added to 2,500 kg of deionized water at ambient temperature and the mixture was stirred for dissolution. Then, 4 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific dens ity. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained each had an appearance that showed agglutinated precipitation and presented iron taste.

### Comparative Example 2

An iron-enriched beverage was produced using chalybeate containing iron and lactoferrins, malic acid as an acidulant and erythritol, a sugar alcohol, as a sweetener.

More particularly, 2.5 kg of malic acid and 570 kg of erythritol were added to 2,500 kg of deionized water at ambient temperature and the mixture was stirred for dissolution. Then, 2 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific density. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained each presented no iron taste and had good flavor and their appearance showed neither precipitation nor turbidity and had a transparent brown color specific to the iron-lactoferrin complex.

### Comparative Example 3

An iron-enriched beverage was produced using chalybeate containing iron and lactoferrins, acetic acid as an acidulant and sucrose as a sweetener.

More particularly, 28.1 kg of 30% acetic acid and 456 kg of sucrose were added to 2,500 kg of deionized water at ambient temperature and the mixture was stirred for dissolution. Then, 2 to 24% by weight of the solution of iron-lactoferrin complex prepared in Reference Example 2 was added thereto and five kinds of iron-enriched beverages with different iron concentrations within this range were produced. These were left to stand at ambient temperature for one night. Thereafter, 10 kg of a flavor was added thereto and the mixture was stirred and made to 5,000 kg with deionized water to adjust its specific density. Thus a raw material mix was prepared.

5,000 kg of the raw material mix was pasteurized (90°C, 15 seconds) in a plate sterilizer and charged in vials, followed by sterilization (15 minutes) with hot-water shower at 70°C. Then, the vials were cooled with warm-water shower at 40°C (5 minutes) to produce iron-enriched beverages. The iron-enriched beverages thus obtained had an appearance that showed neither precipitation nor turbidity and presented no iron taste.

### Test Example 4

Out of the iron-enriched beverages obtained in Examples 1 to 3 and Comparative Examples 1 to 3, those iron-enriched beverages whose iron concentration was 16 mg/100 ml were evaluated for the state of solution and flavor and measured concentration of free iron in the same manner as in Test Example 1. Further, the samples were stored for 1 month at 50°C and evaluation of the state of solution and measurement of free iron concentration were conducted.

Evaluation of the state of solution was performed based on 3-rank scores shown in Table 4.

**Table 4**

| | |
|---|---|
| A | No turbidity nor precipitation was observed and a transparent brown solution. |
| B | Slight precipitation was observed or slight turbidity was observed. |
| C | Considerable precipitation was observed or considerable turbidity was observed. |

Table 5 shows the results.

**Table 5**

| | Ex. 1 | Ex. 2 | Ex. 3 | C.Ex.1 | C.Ex.2 | C.Ex.3 |
|---|---|---|---|---|---|---|
| Immediately after production | A | A | A | C | A | A |
| After 1 month | A | A | A | C | C | A |

Also, evaluation of flavor (iron taste) was performed by a panel consisting of 20 experts based on 4-rank scores shown in Table 6.

**Table 6**

| | |
|---|---|
| Score 0 | No iron taste was presented. |
| Score 1 | slight iron taste was presented. |
| Score 2 | Fairly iron taste was presented. |
| Score 3 | Considerable iron taste was presented. |

Table 7 shows the results. The values in the table are averages of scores.

**Table 7**

| | Example 1 | Example 2 | Example 3 |
|---|---|---|---|
| Immediately after production | 0.10±0.31^{a} | 0.15±0.37^{a} | 0.20±0.41^{a} |
| After 1 month | 0.20±0.41^{a} | 0.25±0.44^{ac} | 0.30±0.47^{ac} |

| | Comparative Example 1 | Comparative Example 2 | Comparative Example 3 |
|---|---|---|---|
| Immediately after production | 1.25±0.44^{b} | 0.25±0.44^{ac} | 0.50±0.51^{a} |
| After 1 month | - | 0.45±0.51^{ac} | 2.75±0.44^{d} |

Significant differences between samples labeled a, b, c, and d (p<0.05).

Also, Table 8 shows the results of measurements of concentration of free iron. The values in the table was average values obtained by repeating the test 5 times. Unit is mg/100 ml.

**Table 8**

| | Example 1 | Example 2 | Example 3 |
|---|---|---|---|
| Immediately after production | 0.22±0.04^{a} | 0.55±0.21^{ac} | 0.56±0.24^{ad} |
| After 1 month | 0.20±0.04^{a} | 0.80±0.13^{bcde} | 0.83±0.36^{bcdf} |

| | Comparative Example 1 | Comparative Example 2 | Comparative Example 3 |
|---|---|---|---|
| Immediately after production | 1.97±0.46^{g} | 0.13±0.05^{a} | 1.13±0.16^{ef} |
| After 1 month | - | 0.47±0.12^{ab} | 13.87±0.98^{h} |

Significant differences between samples labeled a, b, c, d, e, f, g and h (p<0.05).

From the above, it can be seen that iron-enriched beverage produced using chalybeate containing iron and lactoferrins, acetic acid as an acidulant, and maltitol, a non-reducing sugar, as a sweetener (Example 1) had a good quality and was highly tasty without showing generation or increase of precipitation, iron taste, and free iron after storage at 50°C for 1 month. Also, the iron-enriched beverage produced using chalybeate containing iron and lactoferrins, gluconic acid as an acidulant, erythritol, a non-reducing sugar and stevia, a high intensity sweetener as a sweetener (Example 2) and the iron-enriched beverage produced using chalybeate containing iron and lactoferrins, lactic acid as an acidulant, erythritol, a non-reducing sugar, as a sweetener, and reduced millet jelly (H-Pinedex), a non-reducing glucide for adjusting viscosity (Example 3) showed slightly high concentration of free iron as compared with Example 1 immediately after production but there was no significant difference in the generation of iron taste. The tendency that the concentration of free iron slightly increased after storage at 50°C for 1 month was observed. However, no significant difference in the generation of iron taste and the beverage retained good quality.

On the other hand, the iron-enriched beverage produced using chalybeate containing iron and lactoferrins, citric acid as an acidulant and erythritol, a non-reducing sugar, as a sweetener (Comparative Example 1) caused agglutinated precipitation and increase of free iron due to pasteurization during production, so that iron taste occurred significantly. Also, the iron-enriched beverage produced using chalybeate containing iron and lactoferrins, malic acid as an acidulant and erythritol, a non-reducing sugar, as a sweetener (Comparative Example 2) caused agglutinated precipitation after storage at 50°C for 1 month. In this case, however, an increase in the concentration of free iron due to storage was slight as compared with Example 1 and no generation of iron taste occurred. Furthermore, the iron-enriched beverage produced using chalybeate containing iron and lactoferrins, acetic acid as an acidulant and sucrose, as a sweetener (Comparative Example 3) caused no precipitation during production or storage. However, as compared with Examples 1 to 3, the concentration of free iron was significantly high and iron taste was significantly intense. Further, the concentration of free iron increased after storage at 50°C for 1 month and strong iron taste was felt.

Therefore, upon production of iron-enriched beverages, use of chalybeate containing iron and lactoferrins as chalybeate, of at least one member selected from acetic acid, gluconic acid, and lactic acid as an acidulant, and preferably of stable, non-reducing glucide and/or high intensity sweetener as a sweetener can prevent iron taste or precipitation from occurring. The iron-enriched beverages thus produced generate neither iron taste nor precipitation, thus retaining good quality.

### INDUSTRIAL APPLICABILITY

The iron-enriched beverage of the present invention, which is a blend of chalybeate containing iron and lactoferrins, at least one member selected from acetic acid, gluconic acid, and lactic acid as an acidulant and preferably a non-reducing glucide and/or high intensity sweetener as a sweetener, can prevent generation of iron taste or precipitation from occurring. Therefore, the present invention can provide stable, iron-enriched beverages having good flavor and being highly tasty that present no iron taste, which has been the problem of the conventional iron-enriched beverages so that the present invention is useful.

## Claims

1. An iron-enriched beverage comprising chalybeate containing iron and a lactoferrin, at least one acidulant selected from acetic acid, gluconic acid and lactic acid, and a non-reducing glucide and/or a high intensity sweetener as a sweetener.

2. The iron-enriched beverage according to claim 1, wherein the chalybeate is iron-lactoferrin that comprises a lactoferrin to which carbonic acid and/or bicarbonic acid and iron are connected.

3. The iron-enriched beverage according to claim 2, wherein the iron-lactoferrin that comprises a lactoferrin to which carbonic acid and/or bicarbonic acid and iron are connected is an iron-lactoferrin couple and/or iron-lactoferrin complex comprising lactoferrin coupled with 15 mg or more of carbonic acid and/or bicarbonic acid and 10 to 700 mg of iron per 1 g of said lactoferrin.

## Patentansprüche

1. Eisen-angereichertes Getränk, umfassend ein Eisenpräparat, enthaltend Eisen und ein Lactoferrin, mindestens ein Säuerungsmittel, ausgewählt aus Essigsäure, Gluconsäure und Milchsäure, und ein nicht-reduzierendes Glucid und/oder einen Hochintensitätssüßstoff als einen Süßstoff.

2. Eisen-angereichertes Getränk nach Anspruch 1, wobei das Eisenpräparat ein Eisen-Lactoferrin ist, das ein Lactoferrin umfasst, mit welchem zweibasige Kohlensäure und/oder einbasige Kohlensäure und Eisen verbunden sind.

3. Eisen-angereichertes Getränk nach Anspruch 2, wobei das Eisen-Lactoferrin, das ein Lactoferrin umfasst, mit welchem zweibasige Kohlensäure und/oder einbasige Kohlensäure und Eisen verbunden sind, ein Eisen-Lactoferrin-Paar und/oder ein Eisen-Lactoferrin-Komplex ist, umfassend Lactoferrin, verbunden mit 15 mg oder mehr zweibasiger Kohlensäure und/oder einbasiger Kohlensäure und 10 bis 700 mg Eisen pro 1 g des Lactoferrins.

## Revendications

1. Boisson enrichie en fer comprenant du chalybeate contenant du fer et une lactoferrine, au moins un acidulant sélectionné parmi l'acide acétique, l'acide gluconique et l'acide lactique, et un glucide non réducteur et/ou un édulcorant à forte intensité comme édulcorant.

2. Boisson enrichie en fer selon la revendication 1, dans laquelle le chalybeate est un fer-lactoferrine comprenant une lactoferrine à laquelle de l'acide carbonique et/ou de l'acide bicarbonique et du fer sont reliés.

3. Boisson enrichie en fer selon la revendication 2, dans laquelle le fer-lactoferrine qui comprend une lactoferrine à laquelle de l'acide carbonique et/ou de l'acide bicarbonique et du fer sont reliés est un couple fer-lactoferrine et/ou un complexe fer-lactoferrine comprenant de la lactoferrine couplée avec 15 mg ou plus d'acide carbonique et/ou d'acide bicarbonique et de 10 à 700 mg de fer par 1 g de ladite lactoferrine.
